# EUROPEAN PATENT SPECIFICATION

(11) **EP 0 514 052 B1**
(45) Date of publication and mention of the grant of the patent: **27.09.1995**
(21) Application number: 92303975.4
(22) Date of filing: 01.05.1992
(51) Int. Cl.: F02F 11/00, F16J 15/10, F01M 11/00

(54) **Split-type gasket**
Geteilte Abdichtung
Plaque d'étanchéité divisée

(30) Priority: 17.05.1991 JP 35001/91 U; 17.05.1991 JP 35003/91
(43) Date of publication of application: 19.11.1992
(60) Divisional application: 95200291.3
(73) Proprietor: TOKYO GASKET CO., LTD., Hiki-gun, Saitama-ken (JP)
(72) Inventor: Uchida, Tadamasa No. 886-1, Fujigane, Saitama-ken (JP); Fukushima, Kowa, Saitama-ken (JP); Morita, Yasushi, Tokyo (JP)
(74) Representative: Leale, Robin George

(56) References cited:
- DE-U- 8 528 529
- GB-A- 466 375
- US-A- 3 231 289

## Description

This invention refers to a split-type gasket, particularly one configured in ring form and made from a soft material, such as an oil pan gasket to be applied to the contact surfaces between a cylinder block and an oil pan in an engine.

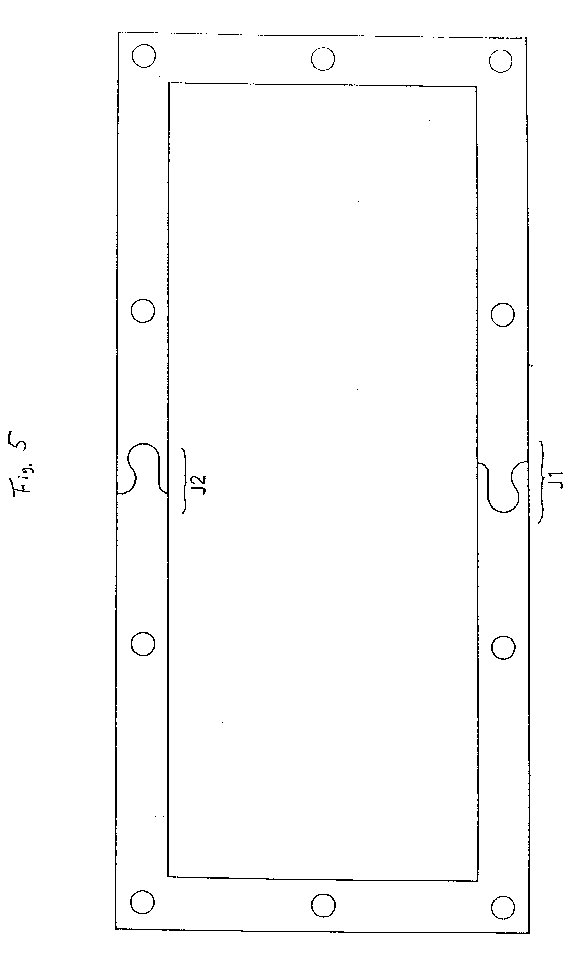

As is well known, a gasket made of a sheet of asbestos containing a soft material, for example, can be punched out in one stroke by means of a punch die. As an antipollution measure, the use of a soft material free from asbestos is desirable, but sheet material of this type is expensive. In order to reduce the cost of a ring-shaped gasket of poor yield, an internal residue which has been punched out in ring form may be reused at times, but with remaining combination problems. Although it is known to form a gasket as a split-type, as illustrated in Fig. 5 of the accompanying drawings, and to apply liquid gasket material to junctions J1 and J2 when assembling it, leaks can easily occur at junction regions where there is a lower contact pressure, which is troublesome and time-consuming.

Although it is known to connect respective parts of a split-type gasket through a piece which is formed with a bolt hole and is made of a different material, the combination of different materials raises other problems such as selection of gasket material and thickness, control of contact pressure and the clamping force of the bolt, and the like, and the presence of connecting areas on both sides of the piece concerned leaves a problem of numerous possible leakage points.

It is also known from US-A-3231289 (Carrell) to provide a split-type gasket comprising at least two gasket sections formed with bolt holes and arranged to be interconnected in the same plane at respective joints to form the gasket, in which each of said joints is formed by a protruding portion on one gasket section and a complementary recess in the other gasket section arranged to receive said protruding portion in interlocking fashion.

According to the present invention, one of the bolt holes of said one gasket section is located in said protruding portion.

With such an arrangement, in use of the gasket, the respective gasket sections are interconnected in a region of homogeneous gasket material at a bolt, where the high and stable contact pressure provided by the bolt increases the reliability of the interlocking of the gasket sections, and prevents leakage.

The protruding portion preferably has a circular outside edge concentric with said bolt hole, and the said recess has a complementary circular inside edge. Preferably the said circular outside edge of the said protruding portion merges smoothly at its inner ends into respective straight edges of said one gasket section which extend laterally outwardly, and the said circular inside edge of the said recess merges smoothly with complementary laterally extending straight edges of the said other gasket section.

Some embodiments of the invention will now be described by way of example and with reference to the accompanying drawings, in which:-
Fig. 1 is a plan view of a first embodiment of a split-type gasket according to the invention;
Fig. 2 is a plan view of one section of a joint in the embodiment of Fig. 1;
Fig. 3 is a plan view of the other section of the joint;
Fig. 4 is a plan view of another embodiment of a joint; and
Fig. 5 is a plan view of a known gasket.

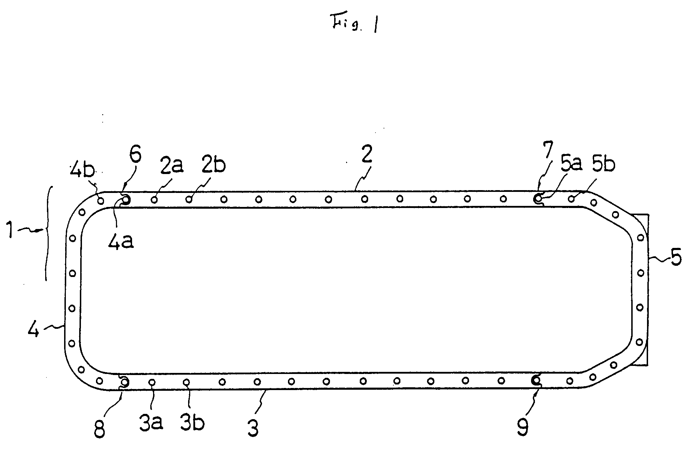

As illustrated in Fig. 1, a split-type gasket 1 consists of two straight gasket sections 2 and 3 and two U-shaped curved gasket sections 4 and 5, all provided with bolt holes 2a, 2b, etc., 3a, 3b, etc., 4a, 4b, etc. and 5a, 5b, etc. The straight sections 2 and 3 and curved sections 4 and 5 are connected together at joints 6 to 9.

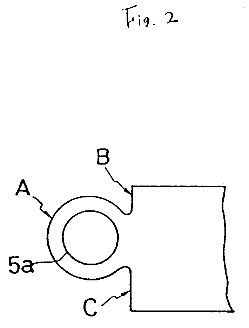

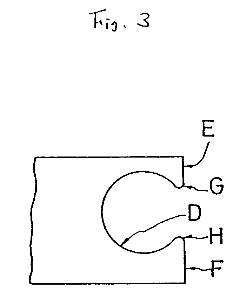

Figs. 2 and 3 show the joints. In the joint section of Fig. 2, a protruding portion A has a circular boundary concentric with bolt hole 5a therein and merges smoothly with laterally extending straight edges B and C by way of small circular arcs. In the joint section of Fig. 3, a recess D has a boundary which is again circular so as closely to receive protruding portion A, and straight laterally extending edges E and F which merge smoothly with recess D at projecting points G and H, all complementary to the configuration of the protruding portion A and edges B and C.

Thus, when the set of gasket sections 2 to 5 is assembled in a common plane on a mounting surface with joints 6 to 9 interconnected, and bolts are inserted through the various bolt holes, no separation of the gasket sections at joints 6 to 9 can take place. Furthermore, as all of the gasket sections may be formed of homogeneous material, the contact pressure is stabilised and no leaks will occur.

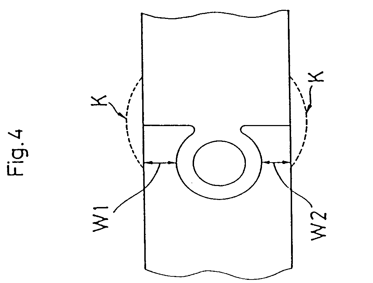

If the dimensions W1 or W2, as illustrated in Fig. 4, would otherwise be so narrow that leakage might occur, then one or both sides of the respective bolt hole, as illustrated with chain lines K and K, may be extended laterally as a circular arc.

It will thus be understood that the present invention, at least in its preferred forms, provides split-type gaskets which are not prone to leak even without liquid gasket application, with low costs of production in terms of both labour and materials, as well as improved yield.

## Claims

1. A split-type gasket (1) comprising at least two gasket sections (2,3,4,5) formed with bolt holes (2a,2b, 3a,3b,4a,4b,5a,5b) and arranged to be interconnected in the same plane at respective joints (6,7,8,9) to form the gasket, in which each of said joints is formed by a protruding portion (A) on one gasket section and a complementary recess (D) in the other gasket section arranged to receive said protruding portion in interlocking fashion; characterised in that one of the bolt holes of said one gasket section is located in the said protruding portion (A).

2. A gasket as claimed in claim 1, wherein said protruding portion (A) has a circular outside edge concentric with said bolt hole, and the said recess (D) has a complementary circular inside edge.

3. A gasket as claimed in claim 2, wherein the said circular outside edge of the said protruding portion merges smoothly at its inner ends into respective straight edges (B,C) of said one gasket section which extend laterally outwardly, and the said circular inside edge of the said recess (D) merges smoothly with complementary laterally extending straight edges (E,F) of the said other gasket section.

## Patentansprüche

1. Geteilte Dichtung (1) mit mindestens zwei Dichtungsabschnitten (2, 3, 4, 5), die mit Schraubenlöchern (2a, 2b, 3a, 3b, 4a, 4b, 5a, 5b) ausgebildet und in Hinblick darauf angeordnet sind, in derselben Ebene an jeweiligen Verbindungen (6, 7, 8, 9) zur Bildung der Dichtung miteinander verbunden zu werden, bei der jede der Verbindungen durch einen vorstehenden Bereich (A) an einem Dichtungsabschnitt und eine komplementäre Aussparung (D) in dem anderen Dichtungsabschnitt ausgebildet ist, die dazu bestimmt ist, den vorstehenden Bereich in verriegelnder Weise aufzunehmen, **dadurch gekennzeichnet**, daß eines der Schraubenlöcher des einen Dichtungsabschnitts in dem vorstehenden Bereich (A) angeordnet ist.

2. Dichtung nach Anspruch 1, **dadurch gekennzeichnet**, daß der vorstehende Bereich (A) einen kreisförmigen Außenrand aufweist, der zu dem Schraubenloch konzentrisch verläuft, und daß die Aussparung (D) einen komplementären, kreisförmigen Innenrand aufweist.

3. Dichtung nach Anspruch 2, **dadurch gekennzeichnet**, daß der kreisförmige Außenrand des vorstehenden Bereichs an seinen Innenenden in jeweilige geradlinige Ränder (B, C) des einen Dichtungsabschnitts glatt übergeht, die sich seitlich nach außen erstrecken, und daß der kreisförmige Innenrand der Aussparung (D) in komplementäre, sich seitlich erstreckende, geradlinige Ränder (E, F) des anderen Dichtungsabschnitts glatt übergeht.

## Revendications

1. Garniture (1) de type divisé qui comporte au moins deux tronçons (2, 3, 4, 5) de garniture formés avec des trous (2a, 2b, 3a, 3b, 4a, 4b, 5a, 5b) de passage de boulons et destinés à être interconnectés dans le même plan à des joints respectifs (6, 7, 8, 9) pour la formation de la garniture, dans laquelle chacun des joints est formé par une partie en saillie (A) d'un premier tronçon de garniture et une cavité complémentaire (D) d'un autre tronçon de garniture destiné à loger la partie en saillie avec emboîtement, caractérisée en ce que l'un des trous de passage de boulons du premier tronçon de garniture est placé dans la partie en saillie (A).

2. Garniture selon la revendication 1, dans laquelle la partie en saillie (A) a un bord externe circulaire concentrique du trou de passage de boulon, et la cavité (D) a un bord interne circulaire complémentaire.

3. Garniture selon la revendication 2, dans laquelle le bord circulaire externe de la partie en saillie se raccorde progressivement, à ses extrémités internes, aux bords rectilignes respectifs (B, C) du premier tronçon de garniture qui dépassent latéralement vers l'extérieur, et le bord circulaire interne de la cavité (D) se raccorde progressivement aux bords rectilignes complémentaires (E, F) qui dépassent latéralement de l'autre tronçon de garniture.
